# EUROPEAN PATENT APPLICATION

(11) **EP 2 123 355 A1**
(43) Date of publication of application: **25.11.2009**
(21) Application number: 09006455.1
(22) Date of filing: 13.05.2009
(51) Int. Cl.: B01J 29/068, B01J 29/072, B01J 29/076, B01J 29/08, B01J 29/18, B01J 29/40, B01J 29/60, B01J 29/65, B01J 29/70, B01J 29/80, B01J 35/02, B01J 35/04, B01J 35/06, B01J 35/10, B01J 37/00, B01D 53/92

(54) **Honeycomb structure**

(30) Priority: 20.05.2008 WO PCT/JP2008/059281
(71) Applicant: Ibiden Co., Ltd., Ogaki-shi, Gifu 503-8604 (JP)
(72) Inventor: Ohno, Kazushige, Ibi-gun Gifu 501-0695 (JP); Kunieda, Masafumi, Ibi-gun Gifu 501-0695 (JP); Ido, Takahiko, Ibi-gun Gifu 501-0695 (JP)
(74) Representative: HOFFMANN EITLE

(57) **Abstract**

When a cross section orthogonal to the longitudinal direction of a honeycomb unit is divided in half at even intervals between the periphery and the center of the cross section, a region on a peripheral side is larger than a region on a central side in the weight ratio of zeolite ion-exchanged with one or more kinds of metal selected from the group consisting of Cu, Mn, Ag, and V and the region on the central side is larger than the region on the peripheral side in the weight ratio of zeolite ion-exchanged with one or more kinds of metal selected from the group consisting of Fe, Ti, and Co relative to the total weight of the zeolite ion-exchanged with one or more kinds of metal selected from the group consisting of Cu, Mn, Ag, and V and the zeolite ion-exchanged with one or more kinds of metal selected from the group consisting of Fe, Ti, and Co.

## Description

### BACKGROUND OF THE INVENTION

### 1. Field of the Invention

The present invention relates to honeycomb structures.

### 2. Description of the Related Art

Conventionally, as a system for converting exhaust gases from automobiles, a SCR (Selective Catalytic Reduction) system in which NOx is reduced to nitrogen and water using ammonia has been known (see below).

4NO + 4NH₃ + O₂ → 4N₂ + 6H₂O

6NO₂ + 8NH₃ → 7N₂ + 12H₂O

NO + NO₂ + 2NH₃ → 2N₂ + 3H₂O

In the SCR system, zeolite is known as a material for absorbing ammonia.

Patent Document 1 discloses a method for converting NOx into innocuous products which involves providing an iron-ZSM-5 monolithic structure zeolite having a silica to alumina mole ratio of at least about 10, wherein the content of the iron is about 1 through 5% by weight, and contacting the zeolite with a NOx-containing process stream in the presence of ammonia at a temperature of at least about 200°C.

Furthermore, Patent Document 2 discloses a honeycomb structure having a honeycomb unit that contains inorganic particles, inorganic fibers, and/or whiskers, wherein the inorganic particles include one or more kinds selected from the group consisting of alumina, silica, zirconia, titania, ceria, mullite, and zeolite.
Patent Document 1: JP-A-9-103653
Patent Document 2: International Publication No. 06/137149

However, the honeycomb structure, which is obtained by extrusion-molding a material using zeolite ion-exchanged with Fe as a main raw material, is low in strength. When fine zeolite is used, or when inorganic particles other than zeolite and inorganic fibers are added to a material for extrusion molding so as to improve the strength of such a honeycomb structure, the honeycomb structure contains a bunch of fine particles, which in turn causes many grain boundaries and reduced thermal conductivity. Therefore, when such a honeycomb structure is applied to the SCR system in which NOx is reduced to nitrogen and water using ammonia, a temperature difference between the central part and the peripheral part of the honeycomb structure caused when exhaust gas flows becomes large as compared with a cordierite substrate. As a result, a region whose temperature is insufficient for the NOx conversion performance of the zeolite ion-exchanged with Fe is caused in the honeycomb structure, so that the NOx conversion ratio of the honeycomb structure becomes insufficient.

### SUMMARY OF THE INVENTION

In view of the problems residing in the related art, the present invention may provide a honeycomb structure capable of improving a NOx conversion ratio in a wide temperature range in a SCR system.

According to an aspect of the present invention, there is provided a honeycomb structure having a honeycomb unit containing zeolite and an inorganic binder and in which plural through-holes are arranged side by side in a longitudinal direction through partition walls. The zeolite includes zeolite ion-exchanged with one or more kinds of metal selected from the group consisting of Cu, Mn, Ag, and V and zeolite ion-exchanged with one or more kinds of metal selected from the group consisting of Fe, Ti, and Co. When a cross section orthogonal to the longitudinal direction is divided into two equal parts at even intervals between the periphery and the center of the cross section, a region on a peripheral side is larger than a region on a central side in the weight ratio of the zeolite ion-exchanged with one or more kinds of metal selected from the group consisting of Cu, Mn, Ag, and V relative to the total weight of the zeolite ion-exchanged with one or more kinds of metal selected from the group consisting of Cu, Mn, Ag, and V and the zeolite ion-exchanged with one or more kinds of metal selected from the group consisting of Fe, Ti, and Co. On the other hand, the region on the central side is larger than the region on the peripheral side in the weight ratio of the zeolite ion-exchanged with one or more kinds of metal selected from the group consisting of Fe, Ti, and Co relative to the total weight of the zeolite ion-exchanged with one or more kinds of metal selected from the group consisting of Cu, Mn, Ag, and V and the zeolite ion-exchanged with one or more kinds of metal selected from the group consisting of Fe, Ti, and Co.

In the region on the peripheral side, the weight ratio of the zeolite ion-exchanged with one or more kinds of metal selected from the group consisting of Cu, Mn, Ag, and V relative to the total weight of the zeolite ion-exchanged with one or more kinds of metal selected from the group consisting of Cu, Mn, Ag, and V and the zeolite ion-exchanged with one or more kinds of metal selected from the group consisting of Fe, Ti, and Co is preferably in the range of 0.80 through 1.00.

In the region on the central side, the weight ratio of the zeolite ion-exchanged with one or more kinds of metal selected from the group consisting of Fe, Ti, and Co relative to the total weight of the zeolite ion-exchanged with one or more kinds of metal selected from the group consisting of Cu, Mn, Ag, and V and the zeolite ion-exchanged with one or more kinds of metal selected from the group consisting of Fe, Ti, and Co is preferably in the range of 0.80 through 1.00.

The content of the zeolite per apparent volume of the honeycomb unit is preferably in the range of 230 through 270 g/L.

The zeolite preferably includes one or more kinds selected from the group consisting of β zeolite, Y zeolite, ferrierite, ZSM5 zeolite, mordenite, faujasite, zeolite A, and zeolite L.

The zeolite preferably has a molar ratio of silica to alumina in the range of 30 through 50.

The zeolite preferably contains secondary particles, and the average particle diameter of the secondary particles is preferably in the range of 0.5 through 10 µm.

The honeycomb unit preferably further contains inorganic particles other than the zeolite, and the inorganic particles other than the zeolite preferably includes one or more kinds selected from the group consisting of alumina, silica, titania, zirconia, ceria, mullite, and precursors thereof.

The inorganic binder is preferably a solid content contained in one or more kinds selected from the group consisting of alumina sol, silica sol, titania sol, water glass, sepiolite, and attapulgite.

The honeycomb unit preferably further contains inorganic fibers, and the inorganic fibers preferably include one or more kinds selected from the group consisting of alumina, silica, silicon carbide, silica alumina, glass, potassium titanate, and aluminum borate.

The porosity of the honeycomb unit is preferably in the range of 25 through 40%.

The opening ratio of the cross section orthogonal to the longitudinal direction of the honeycomb unit is preferably in the range of 50 through 65%.

The density of the through-holes at the cross section orthogonal to the longitudinal direction of the honeycomb unit is preferably in the range of 31 through 124 pieces/cm².

Plural of the honeycomb units are preferably bonded together by interposing an adhesive layer.

An embodiment of the present invention may provide a honeycomb structure capable of improving a NOx conversion ratio in a wide temperature range in a SCR system.

### BRIEF DESCRIPTION OF THE DRAWINGS

Other objects, features and advantages of the present invention will become more apparent from the following detailed description when read in conjunction with the accompanying drawings, in which:
FIG. 1A is a perspective view showing an example of a honeycomb structure according to an embodiment of the present invention;
FIG. 1B is the enlarged view of a cross section orthogonal to the longitudinal direction of the honeycomb structure shown in FIG. 1A;
FIG. 1C is a schematic view showing the cross section orthogonal to the longitudinal direction of the honeycomb structure shown in FIG. 1A;
FIG. 2A is a schematic view showing other example of the cross section orthogonal to the longitudinal direction of the honeycomb structure according to the embodiment of the present invention;
FIG. 2B is a schematic view showing still other example of the cross section orthogonal to the longitudinal direction of the honeycomb structure according to the embodiment of the present invention;
FIG. 3A is a perspective view showing other example of the honeycomb structure according to the embodiment of the present invention;
FIG. 3B is a perspective view showing a honeycomb unit shown in FIG. 3A; and
FIG. 4 is a diagram for explaining a method for measuring a NOx conversion ratio.

### DETAILED DESCRIPTION OF THE PREFERRED EMBODIMENTS

Next, referring to the accompanying drawings, a description is made of the best mode for carrying out an embodiment of the present invention.

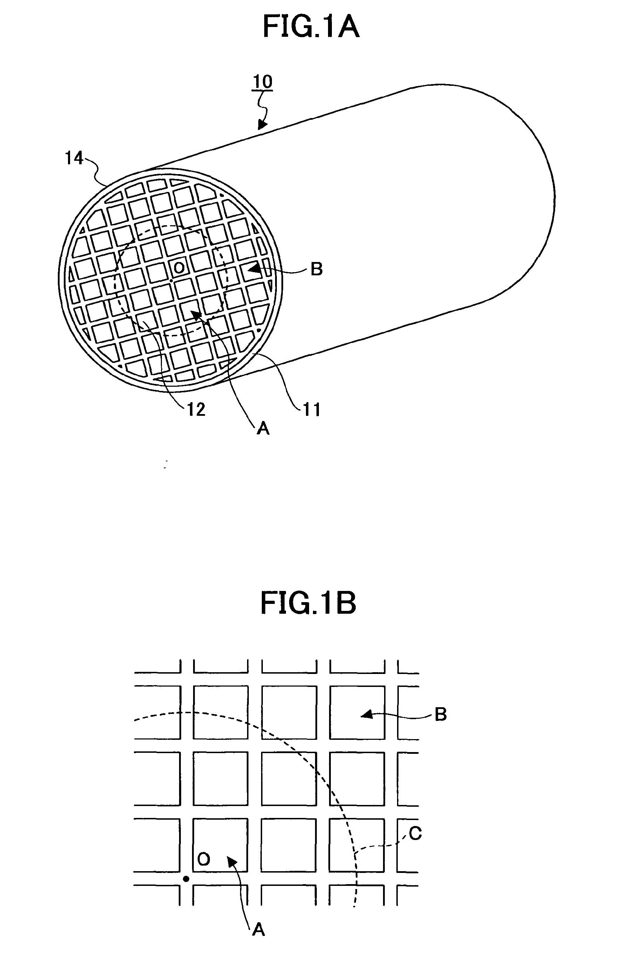

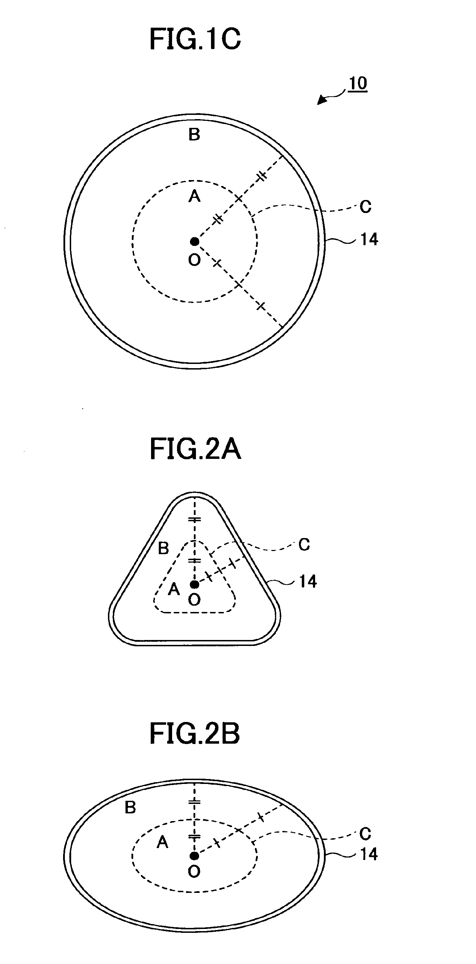

FIGS. 1A, 1B, and 1C show an example of a honeycomb structure according to the embodiment of the present invention. Note that FIGS. 1A, 1B, and 1C are a perspective view showing a honeycomb structure 10, an enlarged view showing a cross section orthogonal to the longitudinal direction of the honeycomb structure 10, and a schematic view showing the cross section orthogonal to the longitudinal direction of the honeycomb structure 10, respectively. The honeycomb structure 10 has a single honeycomb unit 11 containing zeolite and an inorganic binder and in which plural through-holes 12 are arranged side by side in the longitudinal direction through partition walls 12. In addition, a peripheral coating layer 14 is formed on the peripheral surface of the honeycomb unit 11. Here, the zeolite may include zeolite ion-exchanged with one or more kinds of metal selected from the group consisting of Cu, Mn, Ag, and V and zeolite ion-exchanged with one or more kinds of metal selected from the group consisting of Fe, Ti, and Co. In addition, the zeolite may further include zeolite not ion-exchanged and zeolite ion-exchanged with metals other than the above substances. When the honeycomb structure 10 excluding the peripheral coating layer 14, i.e., the cross section orthogonal to the longitudinal direction of the honeycomb unit 11 is divided into two equal parts at even intervals between the periphery and the center O of the cross section, a region B on the peripheral side is larger than a region A on the central side in the weight ratio of the zeolite ion-exchanged with one or more kinds of metal selected from the group consisting of Cu, Mn, Ag, and V relative to the total weight of the zeolite ion-exchanged with one or more kinds of metal selected from the group consisting of Cu, Mn, Ag, and V and the zeolite ion-exchanged with one or more kinds of metal selected from the group consisting of Fe, Ti, and Co. Moreover, the region A on the central side is larger than the region B on the peripheral side in the weight ratio of the zeolite ion-exchanged with one or more kinds of metal selected from the group consisting of Fe, Ti, and Co relative to the total weight of the zeolite ion-exchanged with one or more kinds of metal selected from the group consisting of Cu, Mn, Ag, and V and the zeolite ion-exchanged with one or more kinds of metal selected from the group consisting of Fe, Ti, and Co. Note that a boundary between the region A on the central side and the region B on the peripheral side is represented as a boundary line C.

Note that the honeycomb structure according to the embodiment of the present invention may have the peripheral coating layer formed at its peripheral surface. The region on the central side and the region on the peripheral side of the honeycomb structure are defined by a region other than the peripheral coating layer when the honeycomb structure has the peripheral coating layer, and they are defined by the honeycomb structure when the honeycomb structure does not have the peripheral coating layer.

The present inventors have found that high NOx conversion performance is obtained in a wide temperature range when the zeolite ion-exchanged with one or more kinds of metal selected from the group consisting of Cu, Mn, Ag, and V is arranged at the peripheral part of the honeycomb structure 10 and the zeolite ion-exchanged with one or more kinds of metal selected from the group consisting of Fe, Ti, and Co is arranged at the central part of the honeycomb structure 10. This is because the zeolite ion-exchanged with one or more kinds of metal selected from the group consisting of Cu, Mn, Ag, and V has a higher NOx conversion performance in a low temperature range (e.g., between 150°C and 200°C) than the zeolite ion-exchanged with one or more kinds of metal selected from the group consisting of Fe, Ti, and Co. Therefore, when the honeycomb structure 10 is applied to a SCR system (in which NOx is reduced to nitrogen and water using ammonia), the zeolite in the honeycomb unit 11 can be effectively used for the conversion of NOx, and an NOx conversion ratio can be improved in a wide temperature range (e.g., between 200°C and 500°C).

Hereinafter, the honeycomb structure 10 is described in detail. The honeycomb unit 11 has the region A on the central side and the region B on the peripheral side via the boundary line C. The boundary line C is the line obtained by connecting the dots generated when line segments connecting the center O and the periphery of the cross section are divided into two equal parts at the cross section orthogonal to the longitudinal direction of the honeycomb unit 11. Therefore, the boundary line C is similar in shape to the periphery of the honeycomb unit 11.

Note that provided that the region B on the peripheral side is larger than the region A on the central side in the weight ratio of the zeolite ion-exchanged with one or more kinds of metal selected from the group consisting of Cu, Mn, Ag, and V relative to the total weight of the zeolite ion-exchanged with one or more kinds of metal selected from the group consisting of Cu, Mn, Ag, and V and the zeolite ion-exchanged with one or more kinds of metal selected from the group consisting of Fe, Ti, Co, the weight ratio of the zeolite ion-exchanged of the region A on the central side to the region B on the peripheral side may be constant or continuously or discontinuously changed. When this weight ratio of the zeolite ion-exchanged is changed in the region A on the central side, the ratio of the zeolite ion-exchanged with one or more kinds of metal selected from the group consisting of Fe, Ti, and Co is preferably larger toward the center O. Furthermore, when this weight ratio of the zeolite ion-exchanged is changed in the region B on the peripheral side, the ratio of the zeolite ion-exchanged with one or more kinds of metal selected from the group consisting of Fe, Ti, and Co is preferably larger toward the periphery.

Note that this weight ratio of the zeolite ion-exchanged of the region A on the central side to the region B on the peripheral side can be obtained from the regions excluding the partition walls intersecting with the boundary line C in the regions A and B. This is because the zeolite may penetrate into the partition walls intersecting with the boundary line C.

In the region A on the central side, the weight ratio of the zeolite ion-exchanged with one or more kinds of metal selected from the group consisting of Fe, Ti, and Co relative to the total weight of the zeolite ion-exchanged with one or more kinds of metal selected from the group consisting of Cu, Mn, Ag, and V and the zeolite ion-exchanged with one or more kinds of metal selected from the group consisting of Fe, Ti, and Co is preferably in the range of 0.80 through 1.00 and more preferably in the range of 0.90 through 1.00. When this weight ratio is less than 0.80, the zeolite in the region A on the central side may not be effectively used for the conversion of NOx.

In the region B on the peripheral side, the weight ratio of the zeolite ion-exchanged with one or more kinds of metal selected from the group consisting of Cu, Mn, Ag, and V relative to the total weight of the zeolite ion-exchanged with one or more kinds of metal selected from the group consisting of Cu, Mn, Ag, and V and the zeolite ion-exchanged with one or more kinds of metal selected from the group consisting of Fe, Ti, and Co is preferably in the range of 0.80 through 1.00 and more preferably in the range of 0.90 through 1.00. When this weight ratio is less than 0.80, the zeolite in the region B on the peripheral side may not be effectively used for the conversion of NOx.

In the honeycomb unit 11, the content of zeolite per apparent volume is preferably in the range of 230 through 270 g/L. When the content of zeolite per apparent volume of the honeycomb unit 11 is less than 230 g/L, the apparent volume of the honeycomb unit 11 must be increased so as to obtain a sufficient NOx conversion ratio. When the content of zeolite per apparent volume of the honeycomb unit 11 exceeds 270 g/L, the strength of the honeycomb unit 11 may become insufficient. Note that the zeolite represents the whole zeolite, i.e., the zeolite ion-exchanged and the zeolite not ion-exchanged.

Note that the apparent volume of the honeycomb unit represents a volume including the through-holes.

The ion-exchange amounts of the zeolite ion-exchanged with one or more kinds of metal selected from the group consisting of Cu, Mn, Ag, and V and the zeolite ion-exchanged with one or more kinds of metal selected from the group consisting of Fe, Ti, and Co are independently preferably in the range of 1.0 through 10.0% by weight and more preferably in the range of 1.0 through 5.0% by weight. When the ion-exchange amount is less than 1.0% by weight, variation in the adsorption performance of ammonia may become insufficient. When the ion-exchange amount exceeds 10.0% by weight, the honeycomb unit 11 may become structurally unstable where it is heated. Note that when the zeolite is ion-exchanged, it is impregnated with an aqueous solution containing a cation.

The zeolite is not particularly limited, but examples thereof include β zeolite, ZSM5 zeolite, mordenite, faujasite, zeolite A, zeolite L, and the like. Two or more of these substances may be used in combination. Note that the zeolite represents the whole zeolite.

In addition, the zeolite has a molar ratio of silica to alumina in the range of 30 through 50. Note that the zeolite represents the whole zeolite.

Furthermore, the zeolite preferably contains secondary particles, and the average particle diameter of the secondary particles of the zeolite is preferably in the range of 0.5 through 10 µm. When the average particle diameter of the secondary particles of the zeolite is less than 0.5 µm, a large amount of inorganic binders must be added, which may result in difficulty in extrusion molding of the honeycomb unit. When the average particle diameter of the secondary particles of the zeolite exceeds 10 µm, the specific surface area of the zeolite in the honeycomb unit is reduced, which may result in reduction in a NOx conversion ratio. Note that the zeolite represents the whole zeolite.

Moreover, in order to improve its strength, the honeycomb unit 11 may further contain inorganic particles other than the zeolite. The inorganic particles other than the zeolite are not particularly limited, but examples thereof include alumina, silica, titania, zirconia, ceria, mullite, precursors thereof, and the like. Two or more of these substances may be used in combination. Among these substances, alumina and zirconia are particularly preferable. Note that the zeolite represents the whole zeolite.

The average particle diameter of the inorganic particles other than the zeolite is preferably in the range of 0.5 through 10 µm. When this average particle diameter is less than 0.5 µm, a bunch of inorganic binders must be added, which may result in difficulty in extrusion molding of the honeycomb unit. When this average particle diameter exceeds 10 µm, the effect of improving the strength of the honeycomb unit 11 may become insufficient. Note that the inorganic particles other than the zeolite may contain secondary particles.

Furthermore, the ratio of the average particle diameter of the secondary particles of inorganic particles other than the zeolite to the average particle diameter of the secondary particles of the zeolite is preferably 1 or less and more preferably in the range of 0.1 through 1. When this ratio exceeds 1, the effect of improving the strength of the honeycomb unit 11 may become insufficient. Note that the zeolite represents the whole zeolite.

The content of the inorganic particles other than the zeolite in the honeycomb unit 11 is preferably in the range of 3 through 30% by weight and more preferably in the range of 5 through 20% by weight. When this content is less than 3% by weight, the effect of improving the strength of the honeycomb unit 11 may become insufficient. When this content exceeds 30% by weight, the content of the zeolite in the honeycomb unit 11 is reduced, which may result in reduction in a NOx conversion ratio.

The inorganic binder is not particularly limited, but examples thereof include solid contents included in alumina sol, silica sol, titania sol, water glass, sepiolite, attapulgite, and the like. Two or more of these substances may be used in combination.

The content of the inorganic binder in the honeycomb unit 11 is preferably in the range of 5 through 30% by weight and more preferably in the range of 10 through 20% by weight. When the content of the inorganic binder is less than 5% by weight, the strength of the honeycomb unit 11 may be reduced. When the content of the inorganic binder exceeds 30% by weight, the molding of the honeycomb unit 11 may become difficult.

In order to improve its strength, the honeycomb unit 11 preferably contains inorganic fibers.

The inorganic fibers are not particularly limited so long as they are capable of improving the strength of the honeycomb unit 11, but examples thereof include alumina, silica, silicon carbide, silica alumina, glass, potassium titanate, aluminum borate, and the like. Two or more of these substances may be used in combination.

The aspect ratio of the inorganic fibers is preferably in the range of 2 through 1000, more preferably in the range of 5 through 800, and still more preferably in the range of 10 through 500. When the aspect ratio of the inorganic fibers is less than 2, the effect of improving the strength of the honeycomb structure 11 may be reduced. When the aspect ratio of the inorganic fibers exceeds 1000, clogging, etc., may occur in a molding die at the molding of the honeycomb structure 11. In addition, when the honeycomb structure 11 is molded through extrusion molding, the inorganic fibers are broken, which may reduce the effect of improving the strength of the honeycomb unit 11.

The content of the inorganic fibers in the honeycomb unit 11 is preferably in the range of 3 through 50% by weight, more preferably in the range of 3 through 30% by weight, and still more preferably in the range of 5 through 20% by weight. When the content of the inorganic fibers is less than 3% by weight, the effect of improving the strength of the honeycomb unit 11 may be reduced. When the content of the inorganic fibers exceeds 50%, the content of the zeolite of the honeycomb unit 11 is reduced, which may result in reduction in a NOx conversion ratio.

The porosity of the honeycomb unit 11 is preferably in the range of 25% through 40%. When the porosity of the honeycomb unit is less than 25%, exhaust gases are not likely to penetrate into the partition walls. As a result, the zeolite in the honeycomb unit 11 may not be effectively used for the conversion of NOx. When the porosity of the honeycomb unit exceeds 40%, the strength of the honeycomb unit 11 may become insufficient.

The opening ratio of the cross section orthogonal to the longitudinal direction of the honeycomb unit 11 is preferably in the range of 50 through 65%. When the opening ratio of the honeycomb unit is less than 50%, the zeolite in the honeycomb unit 11 may not be effectively used for the conversion of NOx. When the opening ratio of the honeycomb unit exceeds 65%, the strength of the honeycomb unit 11 may become insufficient.

The density of the through-holes 12 of the cross section orthogonal to the longitudinal direction of the honeycomb unit 11 is preferably in the range of 31 through 124 pieces/cm². When the density of the through-holes 12 of the honeycomb unit is less than 31 pieces/cm², exhaust gases are not likely to contact the zeolite, which may result in reduction in the NOx conversion performance of the honeycomb unit 11. When the density of the through-holes 12 of the honeycomb unit exceeds 124 pieces/cm², the pressure loss of the honeycomb unit 11 may be increased.

The thickness of the partition walls partitioning the through-holes 12 of the honeycomb unit 11 is preferably in the range of 0.10 through 0.50 mm and more preferably in the range of 0.15 through 0.35 mm. When the thickness of the partition walls of the honeycomb unit is less than 0.10 mm, the strength of the honeycomb unit 11 may be reduced. When the thickness of the partition walls of the honeycomb unit exceeds 0.50 mm, exhaust gases are not likely to penetrate into the partition walls. As a result, the zeolite may not be effectively used for the conversion of NOx.

The thickness of the peripheral coating layer 14 is preferably in the range of 0.1 through 2 mm. When the thickness of the peripheral coating layer 14 is less than 0.1 mm, the effect of improving the strength of the honeycomb structure 10 may become insufficient. When the thickness of the peripheral coating layer 14 exceeds 2 mm, the content of the zeolite per unit volume of the honeycomb structure 10 is reduced, which may result in reduction in the NOx conversion performance of the honeycomb structure 10.

The honeycomb structure 10 is of a cylindrical shape. However, the shape of the honeycomb structure according to the embodiment of the present invention is not particularly limited, and examples thereof include a substantially triangular pillar shape (see FIG. 2A), a substantially cylindroid shape (see FIG. 2B), and the like.

Furthermore, the through-holes 12 are of a quadrangular pillar shape. However, the shape of the through-holes according to the embodiment of the present invention is not particularly limited, and examples thereof include a substantially triangular pillar shape, a substantially hexagonal pillar shape, and the like.

Next, an example of a method for manufacturing the honeycomb structure 10 is described. First, raw material pastes for the region A on the central side and the region B on the peripheral side, which contain the zeolite and the inorganic binder and further, as occasion demands, the inorganic particles other than the zeolite, the inorganic fibers, and the like, are subjected to double extrusion molding, thereby manufacturing a cylindrical-shaped raw honeycomb molded body in which the plural through-holes are arranged side by side through the partition walls. Accordingly, the cylindrical-shaped honeycomb unit 11 having sufficient strength can be obtained even at low firing temperature. Here, the paste for the region B on the peripheral side is larger than the paste for the region A on the central side in the weight ratio of the zeolite ion-exchanged with one or more kinds of metal selected from the group consisting of Cu, Mn, Ag, and V relative to the total weight of the zeolite ion-exchanged with one or more kinds of metal selected from the group consisting of Cu, Mn, Ag, and V and the zeolite ion-exchanged with one or more kinds of metal selected from the group consisting of Fe, Ti, and Co.

Note that the inorganic binder is added to the raw material pastes as alumina sol, silica sol, titania sol, water glass, sepiolite, attapulgite, and the like. Two or more of these substances may be used in combination.

Furthermore, an organic binder, a dispersion medium, a molding auxiliary agent, and the like may be added to the raw material pastes as occasion demands.

The organic binder is not particularly limited, but examples thereof include methyl cellulose, carboxymethyl cellulose, hydroxyethyl cellulose, polyethylene glycol, phenol resin, epoxy resin, and the like. Two or more of these substances may be used in combination. Note that the addition amount of the organic binder is preferably in the range of 1 through 10% relative to the total weight of the zeolite, the inorganic particles other than the zeolite, the inorganic fibers, and the inorganic binder. Note that the zeolite represents the whole zeolite.

The dispersion medium is not particularly limited, but examples thereof include water, organic solvents such as benzene, and alcohols such as methanol, and the like. Two or more of these substances may be used in combination.

The molding auxiliary agent is not particularly limited, but examples thereof include ethylene glycol, dextrin, fatty acid, fatty acid soap, polyalcohol, and the like. Two or more of these substances may be used in combination.

When the raw material pastes are prepared, they are preferably mixed and kneaded together. The raw material pastes may be mixed by a mixer, an attritor, and the like, and kneaded by a kneader, and the like.

Next, the honeycomb molded body thus obtained is dried with a drying apparatus such as a microwave drying apparatus, a hot-air drying apparatus, a dielectric drying apparatus, a pressure-reduction drying apparatus, a vacuum drying apparatus, and a freeze drying apparatus.

Then, the obtained honeycomb molded body is degreased. Degreasing conditions are not particularly limited, but they can appropriately be selected according to the kinds and amounts of the organic matters contained in the molded body. However, the honeycomb molded body is preferably degreased at 400°C for two hours.

Next, the honeycomb molded body is fired to obtain the cylindrical-shaped honeycomb unit 11. A firing temperature is preferably in the range of 600 through 1200°C and more preferably in the range of 600 through 1000°C. When the firing temperature is less than 600°C, sintering does not progress, which results in reduction in the strength of the honeycomb unit 11. When the firing temperature exceeds 1200°C, the sintering excessively progresses, which may result in reduction in the reaction sites of the zeolite in the honeycomb unit 11.

Then, the paste for the peripheral coating layer is coated on the peripheral surface of the cylindrical-shaped honeycomb unit 11. The paste for the peripheral coating layer is not particularly limited, but examples thereof include a mixture of the inorganic binder and the inorganic particles, a mixture of the inorganic binder and the inorganic fibers, a mixture of the inorganic binder, the inorganic particles, and the inorganic fibers, and the like.

Furthermore, the paste for the peripheral coating layer may contain the organic binder. The organic binder is not particularly limited, but examples thereof include polyvinyl alcohol, methyl cellulose, ethyl cellulose, carboxymethyl cellulose, and the like. Two or more of these substances may be used in combination.

Next, the honeycomb unit 11 after being coated with the paste for the peripheral coating layer is dried and solidified, thereby obtaining the cylindrical-shaped honeycomb structure 10. When the organic binder is contained in the paste for the peripheral coating layer, the honeycomb structure 10 is preferably degreased. The degreasing conditions may appropriately be determined according to the kinds and amounts of the organic matters contained in the peripheral coating layer, but the organic structure 10 is preferably degreased at 700°C for 20 minutes.

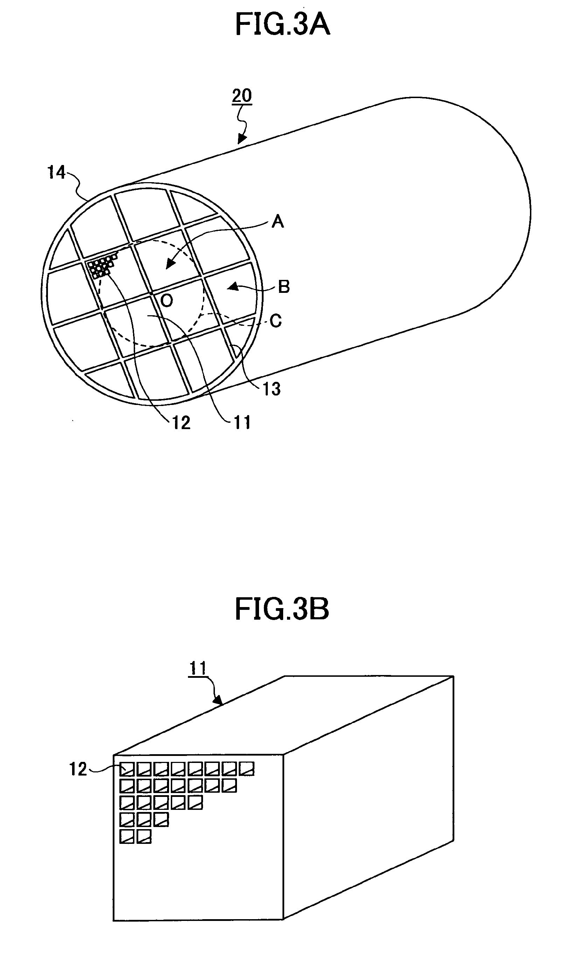

FIGS. 3A and 3B show other example of the honeycomb structure according to the embodiment of the present invention. Note that a honeycomb structure 20 is similar to the honeycomb structure 10 except that it has plural of the honeycomb units 11, in which the plural through-holes 12 are arranged side by side in the longitudinal direction through the partition walls, are bonded together by interposing an adhesive layer 13.

The cross section area of the cross section orthogonal to the longitudinal direction of the honeycomb unit 11 is preferably in the range of 5 through 50 cm². When the cross section area of the honeycomb unit is less than 5 cm², the specific surface area of the honeycomb structure 10 may be reduced and the pressure loss thereof may be increased. When the cross section area of the honeycomb unit exceeds 50 cm², strength for the thermal stress caused in the honeycomb unit 11 may become insufficient.

The thickness of the adhesive layer 13 for bonding the honeycomb units 11 together is preferably in the range of 0.5 through 2 mm. When the thickness of the adhesive layer 13 is less than 0.5 mm, adhesive strength may become insufficient. On the other hand, when the thickness of the adhesive layer 13 exceeds 2 mm, the specific surface area of the honeycomb structure 10 may be reduced and the pressure loss thereof may be increased.

Furthermore, the honeycomb unit 11 is of a quadrangular pillar shape. Here, the shape of the honeycomb unit according to the embodiment of the present invention is not particularly limited, but it is preferably one such as a substantially hexagonal pillar that makes it easy to bond the honeycomb units together.

Next, an example of a method for manufacturing the honeycomb structure 20 is described. First, the quadrangular-pillar-shaped honeycomb units 11 are manufactured in the same manner as the honeycomb structure 10. At this time, the manufactured honeycomb units 11 include honeycomb units for the region A on the central side, honeycomb units for the region B on the peripheral side, and honeycomb units for the region including the boundary line C. The honeycomb units 11 for the region including the boundary line C can be manufactured by double extrusion molding using the material pastes for the regions A and B on the central and the peripheral sides. However, in the embodiment of the present invention, the honeycomb units 11 for the region A on the central side and/or the honeycomb units 11 for the region B on the peripheral side may be used for the region including the boundary line C.

Then, the paste for the adhesive layer is coated on the peripheral surfaces of the honeycomb units 11, and the honeycomb units 11 are bonded together one by one. The bonded honeycomb units 11 are dried and solidified to manufacture the aggregate of the honeycomb units 11. At this time, the aggregate of the honeycomb units 11 after being manufactured may be cut into a cylindrical shape and polished. Furthermore, the honeycomb units having a substantially sector-shaped or a substantially square-shaped cross sections may be bonded together to manufacture the aggregate of the cylindrical-shaped honeycomb units 11.

The paste for the adhesive layer is not particularly limited, but examples thereof include a mixture of the inorganic binder and the inorganic particles, a mixture of the inorganic binder and the inorganic fibers, a mixture of the inorganic binder, the inorganic particles, and the inorganic fibers, and the like.

Furthermore, the paste for the adhesive layer may contain an organic binder. The organic binder is not particularly limited, but examples thereof include polyvinyl alcohol, methyl cellulose, ethyl cellulose, carboxymethyl cellulose, and the like. Two or more of these substances may be used in combination.

Next, the paste for the peripheral coating layer is coated on the peripheral surface of the aggregate of the cylindrical-shaped honeycomb units 11. The paste for the peripheral coating layer is not particularly limited, but it may contain a material the same as or different from the material of the paste for the adhesive layer. Furthermore, the paste for the peripheral coating layer may have the same composition as the paste for the adhesive layer.

Then, the aggregate of the honeycomb units 11 on which the paste for the peripheral coating layer is coated is dried and solidified to obtain the cylindrical shaped honeycomb structure 20. When the organic binder is contained in the paste for the adhesive layer and/or the paste for the peripheral coating layer, the honeycomb structure 20 is preferably degreased. Degreasing conditions are not particularly limited, but they can appropriately be selected according to the kinds and amounts of the organic matters contained in the honeycomb structure 20. However, the honeycomb structure 20 is preferably degreased for 20 minutes at 700°C.

Note that the honeycomb structures 10 and 20 are manufactured in such a manner that a honeycomb structure using a material paste containing zeolite not ion-exchanged is first manufactured and then an aqueous solution containing a cation is applied in the central part and the peripheral part of the honeycomb structure to exchange the ion of the zeolite.

### Examples

### (Example 1)

First, 2250 g of β zeolite having an average particle diameter of 2 µm, a silica/alumina ratio of 40, and a specific surface area of 110 m²/g, 2600 g of alumina sol as an inorganic-binder-containing component having a solid content of 20% by weight, 550 g of γ-alumina as inorganic particles having an average particle diameter of 2 µm, 780 g of alumina fibers as inorganic fibers having an average fiber diameter of 6 µm and an average fiber length of 100 µm, and 410 g of methyl cellulose as an organic binder were mixed and kneaded together to obtain a raw material paste. Next, the raw material paste was extrusion-molded by an extrusion molding machine to obtain a cylindrical-shaped raw honeycomb molded body. Then, the honeycomb molded body was dried by a microwave drying apparatus and a hot-air drying apparatus and degreased at 400°C for five hours. Next, the honeycomb molded body was fired at 700°C for five hours to manufacture a cylindrical-shaped honeycomb unit having a diameter of 143 mm and a length of 150 mm. After that, an iron nitrate aqueous solution and a copper nitrate aqueous solution were applied in the central part and the peripheral part of the honeycomb unit separately several times to exchange the ions of the central part and the peripheral part of the honeycomb unit. The ion-exchange kinds of the zeolite in the region A on the central side and the zeolite in the region B on the peripheral side of the obtained honeycomb unit 11 were Fe and Cu, respectively, and the ion-exchange amount thereof was 3% by weight (see Table 1). Note that the ion-exchange amount was obtained through an IPC emission spectrometry using the ICPS-8100 (manufactured by Shimadzu Corporation). Furthermore, the boundary line C as the boundary between the region A on the central side and the region B on the peripheral side represents the circle positioned 71.5 mm away from the center O on the cross section orthogonal to the longitudinal direction of the honeycomb unit 11, and the ion-exchange amount was obtained from the partition walls that do not intersect with the boundary line C.

Furthermore, the obtained honeycomb unit 11 showed an opening ratio of 60%, a through-hole density of 78 pieces/cm², a partition wall thickness of 0.25 mm, a zeolite content of 250 g/L per apparent volume, and a porosity of 30% at the cross section orthogonal to the longitudinal direction.

Here, the opening ratio was obtained by calculating the areas of the through-holes in the region of a 10 cm square of the honeycomb structure with an optical microscope. Furthermore, the density of the through-holes was obtained by measuring the number of through-holes in the region of the 10 cm square of the honeycomb structure with the optical microscope. Moreover, the partition wall thickness was the average value obtained by measuring the thicknesses of the partition walls (at five areas) of the honeycomb structure with the optical microscope. Furthermore, the porosity was obtained by a mercury penetration method.

Next, 29 parts by weight of γ alumina as inorganic particles having an average particle diameter of 2 µm, 7 parts by weight of alumina fibers as inorganic fiber having an average fiber diameter of 6 µm and an average fiber length of 100 µm, 34 parts by weight of alumina sol as an inorganic-binder-containing component having a solid content of 20% by weight, 5 parts by weight of methyl cellulose as an organic binder, and 25 parts by weight of water were mixed and kneaded together to obtain a paste for the peripheral coating layer.

Moreover, the paste for the peripheral coating layer was coated on the peripheral surface of the honeycomb unit 11 so that the thickness of the peripheral coating layer 14 becomes 0.4 mm. After that, the honeycomb unit 11 was dried and solidified at 120°C and degreased at 400°C for two hours with a microwave drying apparatus and a hot-air drying apparatus to obtain the cylindrical-shaped honeycomb structure 10 having a diameter of 143.8 mm and a length of 150 mm.

### (Example 2)

The honeycomb structure 10 was manufactured in the same manner as Example 1 except that the ion-exchange kinds in the region A on the central side and the region B on the peripheral side were changed by the use of an aqueous solution containing iron nitrate and copper nitrate (see Table 1).

### (Example 3)

The honeycomb structure 10 was manufactured in the same manner as Example 1 except that the ion-exchange kinds in the region A on the central side and the region B on the peripheral side were changed by the use of an aqueous solution containing iron nitrate and silver nitrate (see Table 1).

### (Example 4)

The honeycomb structure 10 was manufactured in the same manner as Example 1 except that the ion-exchange kinds in the region A on the central side and the region B on the peripheral side were changed by the use of an aqueous solution containing iron nitrate and manganese nitrate (see Table 1).

### (Example 5)

The honeycomb structure 10 was manufactured in the same manner as Example 1 except that the ion-exchange kinds in the region A on the central side and the region B on the peripheral side were changed by the use of an aqueous solution containing iron nitrate and vanadium nitrate (see Table 1).

### (Example 6)

The honeycomb structure 10 was manufactured in the same manner as Example 1 except that the ion-exchange kinds in the region A on the central side and the region B on the peripheral side were changed by the use of an aqueous solution containing cobalt nitrate and copper nitrate (see Table 1).

### (Example 7)

The honeycomb structure 10 was manufactured in the same manner as Example 1 except that the ion-exchange kinds in the region A on the central side and the region B on the peripheral side were changed by the use of an aqueous solution containing titanium nitrate and copper nitrate (see Table 1).

### (Example 8)

The honeycomb structure 10 was manufactured in the same manner as Example 1 except that the ion-exchange kinds in the region A on the central side and the region B on the peripheral side were changed by the use of an aqueous solution containing iron nitrate and copper nitrate (see Table 1).

### (Comparative Example 1)

2250 g of β zeolite ion-exchanged with Fe by 3% by weight having an average particle diameter of 2 µm, a silica/alumina ratio of 40, and a specific surface area of 110 m²/g, 2600 g of alumina sol having a solid content of 20% by weight, 550 g of γ-alumina having an average particle diameter of 2 µm, 780 g of alumina fibers having an average fiber diameter of 6 µm and an average fiber length of 100 µm, and 410 g of methyl cellulose were mixed and kneaded together to obtain a raw material paste.

The honeycomb structure 10 was manufactured in the same manner as Example 1 using the obtained raw material paste except that the honeycomb unit was not ion-exchanged (see Table 1).

### (Comparative Example 2)

The honeycomb structure 10 was manufactured in the same manner as Comparative Example 1 except that the ion-exchange kind of zeolite was changed from Fe to Cu (see Table 1).

**(Table 1)**

| | REGION A ON CENTRAL SIDE | REGION B ON PERIPHERAL SIDE | NOx CONVERSION RATIO (%) | |
|---|---|---|---|---|
| | ION-EXCHANGE KIND (WEIGHT RATIO) | ION-EXCHANGE KIND (WEIGHT RATIO) | 1500rpm/40N·m | 3000rpm/170N·m |
| EXAMPLE 1 | Fe(100) | Cu(100) | 71 | 95 |
| EXAMPLE 2 | Fe/Cu(90/10) | Fe/Cu(10/90) | 71 | 95 |
| EXAMPLE 3 | Fe/Ag(90/10) | Fe/Ag(10/90) | 72 | 90 |
| EXAMPLE 4 | Fe/Mn(90/10) | Fe/Mn(10/90) | 70 | 90 |
| EXAMPLE 5 | Fe/V(90/10) | Fe/V(10/90) | 70 | 92 |
| EXAMPLE 6 | Co/Cu(90/10) | Co/Cu(10/90) | 70 | 92 |
| EXAMPLE 7 | Ti/Cu(90/10) | Ti/Cu(10/90) | 70 | 90 |
| EXAMPLE 8 | Fe/Cu(80/20) | Fe/Cu(20/80) | 69 | 92 |
| COMPARATIVE EXAMPLE 1 | Fe(100) | Fe(100) | 46 | 97 |
| COMPARATIVE EXAMPLE 2 | Cu(100) | Cu(100) | 72 | 85 |

Note that A/B (X/Y) of the ion-exchange kind (weight ratio) in the table represents that the weight ratio of A to B is X/Y.

### (Measurement of NOx Conversion Ratio)

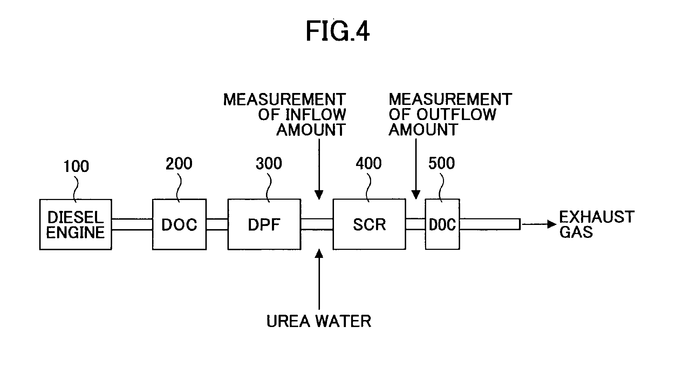

As shown in FIG. 4, a diesel engine (1.6 L direct-injection engine) 100 was operated under conditions that it had a rotation number of 1500 rpm and a torque of 40 N·m or a rotation number of 3000 rpm and a torque of 170 N·m while being connected in series to a diesel oxidation catalyst (DOC) 200, a diesel particulate filter (DPF) 300, a SCR 400, and a diesel oxidation catalyst (DOC) 500 via exhaust pipes. Urea water was injected to the exhaust pipe right before the SCR 400. At this time, the inflow and outflow amounts of nitrogen monoxide (NO) and nitrogen dioxide (NO₂) to and from the SCR 400 were measured by the MEXA-7500DEGR (manufactured by HORIBA, Ltd.), and the NOx conversion ratio (%) represented by the formula "(NOx inflow amount - Nox outflow amount)/(NOx inflow amount) × 100" was measured (detection limit: 0.1 ppm). Note that as the DOC 200, the DPC 300, the SCR 400, and the DOC 500, a honeycomb structure having a diameter of 143.8 mm and a length of 7.35 mm (commercialized product), a honeycomb structure having a diameter of 143.8 mm and a length of 152.4 mm (commercialized product), the honeycomb structures described in Examples 1 through 8 or Comparative Example 1 and 2, and a honeycomb structure having a diameter of 143.8 mm and a length of 50.8 mm (commercialized product), each of which is accommodated in a metal container (shell) and has a holding sealing member (mat) at its periphery, are used, respectively. Measurement results are shown in Table 1. It is clear from Table 1 that the honeycomb structures shown in Examples 1 through 8 are superior to the honeycomb structures shown in Comparative Examples 1 and 2 in a NOx conversion ratio in a wide temperature range.

As described above, the NOx conversion ratio of the honeycomb structure 10 can be improved in a wide temperature range, provided that, when the cross section orthogonal to the longitudinal direction of the honeycomb structure 10 is divided into two equal parts at even intervals between the periphery and the center O of the cross section, the region B on the peripheral side is larger than the region A on the central side in the weight ratio of the zeolite ion-exchanged with one or more kinds of metal selected from the group consisting of Cu, Mn, Ag, and V relative to the total weight of the zeolite ion-exchanged with one or more kinds of metal selected from the group consisting of Cu, Mn, Ag, and V and the zeolite ion-exchanged with one or more kinds of metal selected from the group consisting of Fe, Ti, and Co, and the region A on the central side is larger than the region B on the peripheral side in the weight ratio of the zeolite ion-exchanged with one or more kinds of metal selected from the group consisting of Fe, Ti, and Co relative to the total weight of the zeolite ion-exchanged with one or more kinds of metal selected from the group consisting of Cu, Mn, Ag, and V and the zeolite ion-exchanged with one or more kinds of metal selected from the group consisting of Fe, Ti, and Co.

The present invention is not limited to the specifically disclosed embodiment, but variations and modifications may be made without departing from the scope of the present invention.

## Claims

1. A honeycomb structure having a honeycomb unit containing zeolite and an inorganic binder and in which plural through-holes are arranged side by side in a longitudinal direction through partition walls, **characterized in that**
the zeolite comprises zeolite ion-exchanged with one or more kinds of metal selected from the group consisting of Cu, Mn, Ag, and V and zeolite ion-exchanged with one or more kinds of metal selected from the group consisting of Fe, Ti, and Co, and
when a cross section orthogonal to the longitudinal direction is divided into two equal parts at even intervals between a periphery and a center of the cross section,
a region on a peripheral side is larger than a region on a central side in a weight ratio of the zeolite ion-exchanged with one or more kinds of metal selected from the group consisting of Cu, Mn, Ag, and V relative to a total weight of the zeolite ion-exchanged with one or more kinds of metal selected from the group consisting of Cu, Mn, Ag, and V and the zeolite ion-exchanged with one or more kinds of metal selected from the group consisting of Fe, Ti, and Co, and
the region on the central side is larger than the region on the peripheral side in the weight ratio of the zeolite ion-exchanged with one or more kinds of metal selected from the group consisting of Fe, Ti, and Co relative to the total weight of the zeolite ion-exchanged with one or more kinds of metal selected from the group consisting of Cu, Mn, Ag, and V and the zeolite ion-exchanged with one or more kinds of metal selected from the group consisting of Fe, Ti, and Co.

2. The honeycomb structure according to claim 1, **characterized in that,**
in the region on the peripheral side, the weight ratio of the zeolite ion-exchanged with one or more kinds of metal selected from the group consisting of Cu, Mn, Ag, and V relative to the total weight of the zeolite ion-exchanged with one or more kinds of metal selected from the group consisting of Cu, Mn, Ag, and V and the zeolite ion-exchanged with one or more kinds of metal selected from the group consisting of Fe, Ti, and Co is in a range of 0.80 through 1.00.

3. The honeycomb structure according to claim 1 or 2, **characterized in that,**
in the region on the central side, the weight ratio of the zeolite ion-exchanged with one or more kinds of metal selected from the group consisting of Fe, Ti, and Co relative to the total weight of the zeolite ion-exchanged with one or more kinds of metal selected from the group consisting of Cu, Mn, Ag, and V and the zeolite ion-exchanged with one or more kinds of metal selected from the group consisting of Fe, Ti, and Co is in a range of 0.80 through 1.00.

4. The honeycomb structure according to any one of claims 1 through 3, **characterized in that**
a content of the zeolite per apparent volume of the honeycomb unit is in a range of 230 through 270 g/L.

5. The honeycomb structure according to any one of claims 1 through 4, **characterized in that**
the zeolite comprises one or more kinds selected from the group consisting of β zeolite, Y zeolite, ferrierite, ZSM5 zeolite, mordenite, faujasite, zeolite A, and zeolite L.

6. The honeycomb structure according to any one of claims 1 through 5, **characterized in that**
the zeolite has a molar ratio of silica to alumina in a range of 30 through 50.

7. The honeycomb structure according to any one of claims 1 through 6, **characterized in that**
the zeolite contains secondary particles, and an average particle diameter of the secondary particles of the zeolite is in a range of 0.5 through 10 µm.

8. The honeycomb structure according to any one of claims 1 through 7, **characterized in that**
the honeycomb unit further contains inorganic particles other than the zeolite.

9. The honeycomb structure according to claim 8, **characterized in that**
the inorganic particles other than the zeolite comprises one or more kinds selected from the group consisting of alumina, silica, titania, zirconia, ceria, mullite, and precursors thereof.

10. The honeycomb structure according to any one of claims 1 through 9, **characterized in that**
the inorganic binder is a solid content contained in one or more kinds selected from the group consisting of alumina sol, silica sol, titania sol, water glass, sepiolite, and attapulgite.

11. The honeycomb structure according to any one of claims 1 through 10, **characterized in that**
the honeycomb unit further contains inorganic fibers.

12. The honeycomb structure according to claim 11, **characterized in that**
the inorganic fibers comprise one or more kinds selected from the group consisting of alumina, silica, silicon carbide, silica alumina, glass, potassium titanate, and aluminum borate.

13. The honeycomb structure according to any one of claims 1 through 12, **characterized in that**
a porosity of the honeycomb unit is in a range of 25% through 40%.

14. The honeycomb structure according to any one of claims 1 through 13, **characterized in that**
an opening ratio of the cross section orthogonal to the longitudinal direction of the honeycomb unit is in a range of 50% through 65%.

15. The honeycomb structure according to any one of claims 1 through 14, **characterized in that**
a density of the through-holes at the cross section orthogonal to the longitudinal direction of the honeycomb unit is in a range of 31 through 124 pieces/cm².

16. The honeycomb structure according to any one of claims 1 through 15, **characterized in that**
plural of the honeycomb units are bonded together by interposing an adhesive layer.
